# FASCICULE DE BREVET EUROPEEN

(11) **EP 1 865 621 B1**
(45) Date de publication et mention de la délivrance du brevet: **26.05.2010**
(21) Numéro de dépôt: 07109776.0
(22) Date de dépôt: 07.06.2007
(51) Int. Cl.: H04B 7/14

(54) **Répéteur de signaux radiofréquences de téléphone mobile**
Wiederholer von Funkfrequenzsignalen mobiler Telephonie
Repeater of mobile telephony radio frequency signals

(30) Priorité: 08.06.2006 FR 0605091
(43) Date de publication de la demande: 12.12.2007
(73) Titulaire: FRANCE TELECOM, 75015 Paris (FR)
(72) Inventeur: Charles, Jean-Pierre, 78180 Montigny Le Bretonneux (FR)
(74) Mandataire: Cabinet Plasseraud

(56) Documents cités:
- WO-A-00/72466
- WO-A-97/29608
- WO-A-03/051074
- US-A- 5 638 422
- US-A- 5 918 154
- US-A- 5 953 670
- US-A1- 2002 059 615

## Description

La présente invention concerne l'amplification de signaux radiofréquences de téléphonie mobile. On entend par « signaux radiofréquences de téléphonie mobile » tout signal radiofréquence véhiculant des données sonores (voix, musique ou autre), ou multimedia (image, son ou autre). Les données multimédia peuvent par exemple comprendre des SMS ("Short Message Service") et des MMS ("Multimedia Message Service").

La téléphonie mobile a connu un essor rapide. A titre d'exemple, la norme GSM (acronyme de "Global System for Mobile communications") est particulièrement répandue. Plusieurs bandes de fréquences sont utilisées aujourd'hui dans les réseaux GSM, par exemple la bande des 900 MHz et la bande des 1800 MHz.

Dans la plupart des pays, la couverture à l'extérieur des bâtiments est quasi-totale. Toutefois, certaines zones, par exemple l'intérieur des bâtiments dans des régions sub-urbaines ou rurales, sont encore relativement mal desservies. Ce déficit de couverture est connu et les opérateurs de téléphonie mobile sont à la recherche de solutions simples, bon marché et permettant d'accroître la couverture, en particulier à l'intérieur des bâtiments ("indoor" en anglais) pour favoriser la substitution fixe mobile.

Il est connu d'utiliser un dispositif de type répéteur pour amplifier des signaux radiofréquences de façon bidirectionnelle et permettre ainsi d'étendre la couverture d'un réseau sans fil. Par exemple, un répéteur peut être installé à l'intérieur d'un bâtiment ou bien encore dans une vallée encaissée.

On peut citer à titre d'exemple le répéteur ALR1200 de Powerwave Technologies.

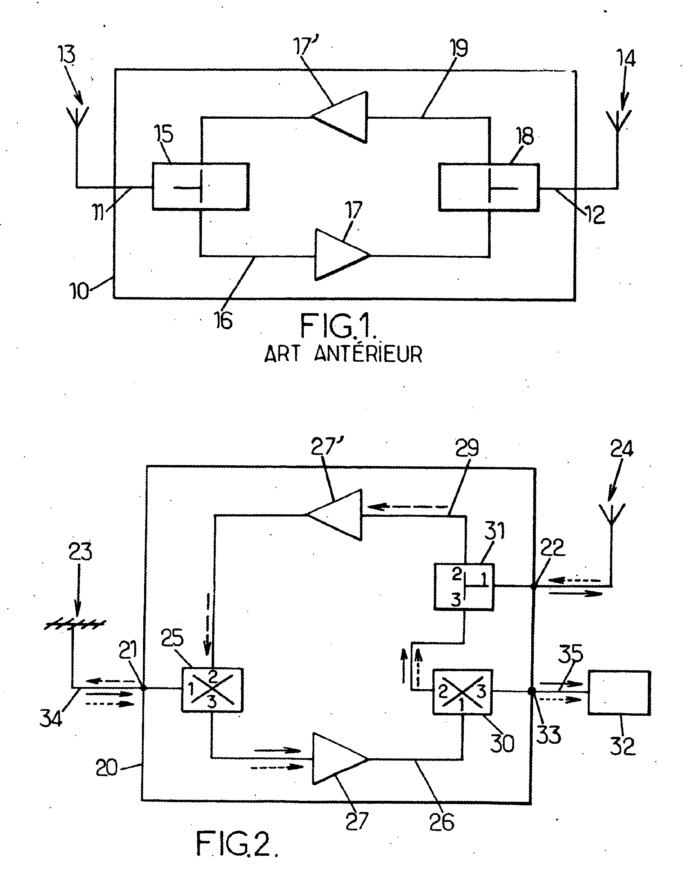

La figure 1 montre un exemple de système de répéteur connu de l'art antérieur. Le répéteur 10 comprend une première voie 11 et une seconde voie 12, respectivement destinées à être reliées à une première antenne 13 et une seconde antenne 14. Dans le cas d'un réseau GSM, les antennes 13, 14 fonctionnent par exemple dans la bande GSM des 900 MHz.

Un premier duplexeur 15, par exemple le duplexeur 782 10164 de la société Kathrein, permet de séparer des signaux radioélectriques descendants, typiquement entre 935 MHz et 960 MHz, de signaux radioélectriques montants, typiquement entre 890 MHz et 915 MHz, respectivement reçus par l'antenne 13 et destinés à être transformés par l'antenne 13 en signaux radiofréquences.

Les signaux descendants arrivent sur le duplexeur 15 et sont dirigés sur une voie descendante 16, sur laquelle ils sont amplifiés par un premier amplificateur 17. Les signaux descendants amplifiés parviennent à un second duplexeur 18 et repartent sur la seconde voie 12, afin que l'antenne 14 émette des signaux radiofréquences correspondant aux signaux descendants.

De la même façon, les signaux montants reçus par l'antenne 14 sur la seconde vole 12 arrivent au duplexeur 18, passent sur une voie montante 19 et sont amplifiés par un second amplificateur 17'. Les signaux montants amplifiés transitent ensuite via le duplexeur 15 et sont transformés par l'antenne 13 en signaux radiofréquences.

Dans le cas d'un répéteur destiné à étendre la couverture d'un réseau à l'intérieur d'un bâtiment, l'antenne 13 est disposée à l'extérieur du bâtiment et l'antenne 14 à l'intérieur du bâtiment.

Le document WO 03/051074 décrit un système raccordé à d'une part une antenne de télévision et une antenne de téléphonie mobile, et d'autre part à un poste de télévision et une antenne de téléphonie mobile.

De manière générale, un système comprenant un répéteur et deux antennes peut être relativement délicat à installer, en particulier lorsque des fils doivent être tirés entre le répéteur et les antennes. Par exemple, il peut être nécessaire de placer une antenne sur un toit et de la raccorder à un boîtier d'un répéteur par l'intermédiaire d'un câble coaxial.

La présente invention vient améliorer la situation. Elle propose de s'adosser à une installation de réception de signaux de diffusion ("broadcasting" en anglais), notamment pour la télévision, et de profiter notamment de l'antenne de cette installation pour recevoir et émettre des signaux de téléphonie mobile.

Selon un premier aspect, l'invention a pour objet un système d'amplification de signaux radiofréquences de téléphonie mobile reçus dans une première bande de fréquences, comprenant un dispositif répéteur comprenant des moyens d'amplification bidirectionnels de signaux radioélectriques. Une première antenne et une deuxième antenne sont disposées de part et d'autre du dispositif répéteur. Les antennes fonctionnent dans la première bande de fréquences, la première antenne étant agencée pour recevoir en outre des signaux radiofréquences de diffusion dans une deuxième bande de fréquences.

Le système d'amplification permet ainsi à la fois de recevoir des signaux de diffusion et d'amplifier de manière bidirectionnelle des signaux de téléphonie mobile. Un tel système est plus simple à installer que deux systèmes, l'un pour la réception des signaux de diffusion, l'autre pour l'amplification bidirectionnelle des signaux de téléphonie mobile.

Le système d'amplification selon un aspect de l'invention est également moins onéreux que ces deux systèmes, l'installation étant également moins onéreuse.

Le terme « diffusion » ne se limite pas à la diffusion télévisuelle, ou télédiffusion ("TV broadcasting" en anglais), d'émissions de télévision. Ce terme « diffusion » couvre par exemple la radiodiffusion ("radio broadcasting" en anglais), c'est-à-dire la diffusion audio d'émissions de radio, ou bien encore la diffusion de données ("data broadcasting" en anglais).

La présente invention n'est pas limitée par le mode de fonctionnement des moyens d'amplification bidirectionnels, pourvu qu'ils conviennent à une application de téléphonie mobile.

Le dispositif répéteur peut par exemple être intégré dans un système de réception de diffusion existant, le système de réception comprenant la première antenne, par exemple une antenne de télévision, et un câble coaxial pour relier l'antenne de télévision à un module de réception, par exemple un poste de télévision. La plupart des bâtiments étant en effet équipés d'une antenne de télévision, la mise en place du système d'amplification est relativement aisée. Il suffit de raccorder le dispositif répéteur à l'antenne de télévision, puis d'adjoindre la deuxième antenne au dispositif répéteur, pour accroître la qualité des signaux de téléphonie mobile à l'intérieur du bâtiment.

De plus, la mise en place de la télévision numérique, par exemple selon la norme DVB-T (acronyme de "Digital Video Broadcasting - Terrestrial"), s'accompagne de l'introduction de décodeurs dans les foyers, et parfois de rajustements, voire de remplacements, des antennes de télévision. On peut par exemple prévoir d'intégrer un dispositif répéteur et une antenne de téléphonie mobile dans les boîtiers de ces décodeurs, afin de garantir une bonne couverture de téléphonie mobile par la même occasion.

Alternativement, un système répéteur existant peut être modifié pour intégrer un dispositif de réception, le système répéteur comprenant un répéteur et deux antennes de téléphonie mobile. Par exemple, une de ces antennes est remplacée par une antenne fonctionnant dans les première et deuxième bandes de fréquences. En outre, la voie descendante du répéteur peut être raccordée à un module de réception de façon à transmettre à ce module des signaux de diffusion reçus par la nouvelle antenne.

Alternativement, un système d'amplification selon le premier aspect de l'invention, comprenant les antennes et le dispositif répéteur peut être installé en une seule fois.

La présente invention n'est pas limitée par la nature du système de réception.

Selon un deuxième aspect, la présente invention a pour objet un dispositif répéteur pour amplifier des signaux radiofréquences de téléphonie mobile, comprenant :
- des moyens d'amplification bidirectionnels pour amplifier des signaux radioélectriques montants sur une voie montante et des signaux radioélectriques descendants sur une voie descendante,
- des moyens d'isolation pour isoler la voie montante et la voie descendante l'une de l'autre,
- des premiers moyens de raccordement pour raccorder les voies montantes et descendantes à une première antenne en amont de la voie descendante,
- des deuxièmes moyens de raccordement pour raccorder les voies montantes et descendantes à une deuxième antenne en aval de la voie descendante, les antennes fonctionnant sur la première bande de fréquences.

La première antenne est agencée pour recevoir en outre des signaux radiofréquences de diffusion dans une deuxième bande de fréquences. Le dispositif répéteur comprend en outre des troisièmes moyens de raccordement pour délivrer les signaux reçus par la première antenne dans la deuxième bande de fréquences.

Ainsi, le dispositif répéteur permet à la fois d'amplifier de manière bidirectionnelle les signaux dans la première bande de fréquences et de recevoir les signaux dans la deuxième bande de fréquences. Dit autrement, le dispositif répéteur intègre un répéteur pour les signaux de téléphonie mobile, et un dispositif de réception de signaux de diffusion. La mise en place est facilitée de part la réduction du nombre de dispositifs à installer, et le coût global est réduit.

Le dispositif répéteur peut comprendre des moyens pour effectuer une conversion en fréquence intermédiaire afin de faciliter les fonctions d'amplification et de filtrage des signaux de téléphonie mobile, ou bien ne pas comprendre de tels moyens. Le dispositif répéteur peut alternativement être sélectif, c'est-à-dire qu'il choisit un (ou des) canal de fréquences parmi les fréquences de la première bande de fréquences, ou non sélectif, c'est-à-dire qu'il transmet toute la bande.

Avantageusement, les moyens d'isolation comprennent un coupleur, ce qui permet ainsi une isolation correcte entre les voies montantes et descendantes, de façon relativement simple. Les moyens d'isolation sont alors compacts et peu onéreux.

Bien entendu, la présente invention n'est pas limitée par le choix d'un coupleur. Par exemple, les moyens d'isolation peuvent comprendre un duplexeur, ce qui garantit ainsi une isolation relativement performante.

Avantageusement, le dispositif répéteur comprend des premiers moyens de filtrage agencés pour filtrer les signaux montants reçus par la deuxième antenne. Les moyens de filtrage peuvent par exemple présenter une fréquence de coupure à l'extérieur d'une sous-bande de la première bande à laquelle appartiennent les signaux montants reçus par la deuxième antenne. En particulier, les signaux montants peuvent être filtrés à l'entrée des troisièmes moyens de raccordement. On peut ainsi s'assurer de ce que le module de réception est protégé des signaux montants. En effet, l'amplitude des signaux montants peut dans certains cas, en particulier lorsqu'un terminal de téléphonie mobile se trouve dans un proche voisinage de la deuxième antenne, être trop élevée pour que ceux-ci soient efficacement filtrés par les filtres des modules de réception existants.

La présente invention n'est pas limitée par la présence de ces premiers moyens de filtrage, en particulier, si le dispositif répéteur est destiné à être raccordé à un module de réception comprenant des filtres efficaces pour éliminer les signaux de téléphonie mobile.

Avantageusement, le dispositif répéteur comprend des deuxièmes moyens de filtrage présentant une fréquence de coupure entre la deuxième bande de fréquences et une sous-bande de la première bande, à laquelle appartiennent les signaux radioélectriques descendants de téléphonie mobile. Les deuxièmes moyens de filtrage permettent ainsi de distinguer les signaux de téléphonie mobile et les signaux de diffusion parmi les signaux radioélectriques descendants. Les deuxièmes moyens de filtrage peuvent par exemple être du type passe-bande, avec au moins une des fréquences de coupure entre la deuxième bande de fréquences et la sous-bande descendante de la première bande.

Les deuxièmes moyens de filtrage peuvent par exemple être placés sur la voie descendante, et être raccordés aux deuxièmes moyens de raccordement d'une part et aux troisièmes moyens de raccordement de l'autre. La deuxième antenne ne reçoit ainsi pas de signaux de diffusion et le module de réception ne reçoit pas de signaux de téléphonie mobile descendants.

Les premiers et deuxièmes moyens de filtrage peuvent également être intégrés dans un duplexeur. Le duplexeur, grâce aux premiers moyens de filtrage, permet de protéger les troisièmes moyens de raccordement des signaux montants. Les deuxièmes moyens de filtrage permettent de protéger les deuxièmes moyens de raccordement des signaux de diffusion. Le duplexeur autorise ainsi seulement le passage des signaux de téléphonie mobile descendants de la voie descendante vers les deuxièmes moyens de raccordement et le passage des signaux montants des deuxièmes moyens de raccordement vers la voie montante.

La présente invention n'est bien entendu pas limitée par la présence des deuxièmes moyens de filtrage. La plupart des terminaux de téléphonie mobile et la plupart des modules de réception de télévision intègrent en effet des filtres suffisamment efficaces pour se protéger des signaux de diffusion et des signaux descendants de téléphonie mobile respectivement.

Selon un troisième aspect, l'invention a pour objet un procédé d'amplification de signaux radiofréquences de téléphonie mobile dans une première bande de fréquences, comprenant les étapes suivantes :
- amplifier de façon bidirectionnelle des signaux radioélectriques sur une voie montante et sur une voie descendante,
- isoler la voie montante et la voie descendante l'une de l'autre,
- raccorder les voies montantes et descendantes à une première antenne en amont de la voie descendante, la première antenne fonctionnant sur la première bande de fréquences et étant agencée pour recevoir des signaux radiofréquences de diffusion sur une deuxième bande de fréquences,
- raccorder les voies montantes et descendantes à une deuxième antenne en aval de la voie descendante, la deuxième antenne fonctionnant dans la première bande de fréquences.

On peut prévoir d'intégrer dans un boîtier des moyens d'amplification et des moyens d'isolation, ce boîtier étant par la suite raccordé in situ aux antennes, et éventuellement à un module de réception, par exemple un poste de télévision. Alternativement, le raccordement du boîtier à la deuxième antenne peut être effectué en usine, et les autres raccordements in situ, par exemple chez des particuliers.

D'autres particularités et avantages de la présente invention apparaîtront dans la description ci-après d'exemples de réalisation non limitatifs, en référence aux dessins annexés, dans lesquels :
- la figure 1 montre un exemple de système de répéteur connu de l'art antérieur ;
- la figure 2 montre un exemple de système d'amplification au sens de l'invention.
- la figure 3 montre un exemple d'installation comprenant le système d'amplification de la figure 2.

Le système d'amplification représenté sur la figure 2 comprend une première antenne 23, un dispositif répéteur 20 monté dans un boîtier, une deuxième antenne 24 et un module de réception 32.

Les antennes 23, 24 fonctionnent dans une première bande de fréquences. L'antenne 23 est également capable de recevoir des signaux dans une deuxième bande de fréquences.

La première bande de fréquences correspond à une application de téléphonie mobile, par exemple selon la norme GSM, et la deuxième bande de fréquences correspond à une application de diffusion, ici de télédiffusion. Le module de réception 32 peut par exemple comprendre un poste de télévision.

Dans l'exemple représenté, la première bande de fréquences comprend la bande GSM à 900 MHz et la deuxième bande de fréquences comprend la bande UHF (acronyme de "Ultra High Frequencies") entre environ 460 MHz et environ 860 MHz. La première antenne fonctionne ainsi sur une gamme de fréquences entre environ 460 MHz et environ 960 MHz. Les antennes Yagi couramment utilisées pour la télévision hertzienne couvrent en général cette gamme de fréquences.

Alternativement, une autre norme de téléphonie mobile peut être utilisée, par exemple l'une des normes D-AMPS (acronyme de "Digital Analogue Mobile Phone System"), CDMA (acronyme de "Code Division Multiple Access"), PDC (acronyme de "Personal Digital Cellular") ou une autre norme impliquant des fréquences proches des hautes fréquences de la bande UHF. Selon un autre exemple, la norme de téléphonie mobile implique des fréquences proches des basses fréquences de la bande UHF, comme c'est par exemple le cas dans les réseaux cellulaires à 450 MHz. Selon encore un autre exemple, la première bande comprend une bande DCS (acronyme de "Digital Communications System") autour de 1800 MHz. Les antennes de télévision classiques peuvent en effet être capable d'exploiter des signaux DCS.

Pour revenir à la figure 2, l'antenne de télévision 23 permet de recevoir des signaux descendants dans la bande UHF (représentés par des flèches en pointillés) et des signaux GSM descendants (représentés par des flèches en trait plein) dans une sous-bande descendante, entre sensiblement 935 MHz et sensiblement 960 MHz. Ces signaux GSM descendants sont typiquement émis par les différents sites des opérateurs mobiles titulaires d'une licence dans la bande à 900 MHz. L'antenne 23 permet également d'émettre des signaux radiofréquences correspondant à des signaux GSM montants (représentés par des flèches en tirets), dans une sous-bande montante, entre sensiblement 890 MHz et sensiblement 915 MHz.

L'antenne GSM 24 permet de recevoir les signaux GSM montants et d'émettre des signaux radiofréquences correspondants aux signaux GSM descendants captés par l'antenne de télévision 23.

Le poste de télévision 32 reçoit quant à lui les signaux descendants dans la bande UHF.

L'antenne 23 est reliée au dispositif 20 via des premiers moyens de raccordement 21, comprenant par exemple une première voie et une fiche pour recevoir un connecteur d'un câble coaxial 34. L'antenne 24 est reliée au dispositif 20 via des deuxièmes moyens de raccordement 22, comprenant par exemple une deuxième voie et un support d'antenne. Le poste de télévision 32 est relié au dispositif 20 via des troisièmes moyens de raccordement 33, comprenant par exemple une troisième voie et une fiche pour recevoir un connecteur d'un câble coaxial 35.

Les signaux montants et descendants transitent via une voie montante 29 et une voie descendante 26 respectivement. Sur la voie descendante 26 est monté un premier amplificateur faible bruit 27 pour amplifier les signaux GSM et UHF descendants. Un second amplificateur faible bruit 27' est monté sur la voie montante 29 de façon à amplifier les signaux GSM montants.

Des moyens d'isolation 25, 31, permettent d'isoler la voie montante 29 de la voie descendante 26 et réciproquement.

Dans le mode de réalisation préféré, les moyens d'isolation comprennent un premier coupleur 25. L'antenne 23 est raccordée à la borne 1 de ce coupleur 25, les voies montantes et descendantes étant respectivement couplées aux bornes 2 et 3 du coupleur 25. Le coupleur 25 permet d'assurer une isolation correcte entre les bornes 2 et 3, c'est-à-dire entre la voie montante 29 et la voie descendante 26. Les signaux qui transitent sur la première voie reliant l'antenne 23 au coupleur 25 sont partagés entre la voie montante 29 et la voie descendante 26.

Le dispositif répéteur 20 comprend également un second coupleur. Les signaux descendants arrivent de la voie descendante 26 sur la borne 1 de ce coupleur 30 et sont répartis entre la borne 2 et la borne 3 du coupleur 30. Une partie des signaux descendants est ainsi dirigée vers le poste de télévision 32, l'autre partie étant dirigée vers un duplexeur 31.

L'isolation entre les bornes 2 et 3 de chaque coupleur 25, 30, peut être relativement élevée, typiquement supérieure à 20 dB. La bande passante de chaque coupleur 25, 30 et des amplificateurs faible bruit 27, 27' comprend la gamme de fréquences entre 460 MHz et 960 MHz. Chaque coupleur 25, 30 introduit une perte de 3 dB environ. On peut par exemple choisir les coupleurs commercialisés par la société Mini-Circuits® sous la référence ADP 2-10-75.

Le poste de télévision 32 comprend des moyens de filtrage non représentés, qui permettent d'écarter les signaux GSM descendants et montants parmi les signaux qui parviennent au poste de télévision, pour ne conserver sensiblement que les signaux UHF.

Le duplexeur 31, par exemple le duplexeur DFYG5902MLEJAA de la société muRata, permet d'isoler efficacement la voie montante 26 de la voie descendante 29 et réciproquement. Le duplexeur 31 intègre des moyens de filtrage non représentés, par exemple des filtres à onde acoustique de surface SAW (acronyme de "Surface Acoustic Waves") ou des filtres à ondes de volume BAW (acronyme de "Bulk Acoustic Waves"), pour séparer les signaux selon leur fréquence. Ces moyens de filtrage permettent de séparer la sous-bande montante (890-915 MHz) de la sous-bande descendante (935-960 MHz). Le filtre peut être relativement raide, de sorte que les signaux GSM montants susceptibles de perturber le récepteur de télévision 32, sont filtrés à l'entrée de la borne 3, et passent seulement vers la voie montante 29. Les signaux GSM descendants, typiquement entre 935 MHz et 960 MHz, sont orientés vers l'antenne 24. Les signaux UHF, entre sensiblement 460 MHz et sensiblement 860 MHz, sont en revanche filtrés par le duplexeur 31 et ne passent pas sur la deuxième voie.

Dans cet exemple, le poste de télévision 32 reçoit les signaux UHF amplifiés par l'amplificateur 27, offrant ainsi une réception de télévision de relativement bonne qualité.

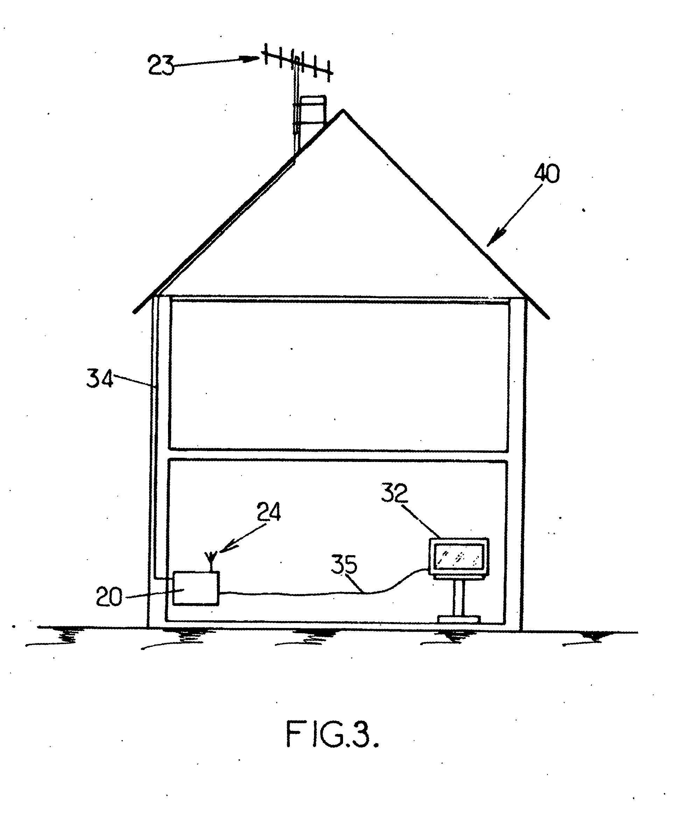

La figure 3 montre un exemple d'installation comprenant le système d'amplification de la figure 2. Dans cet exemple, le dispositif répéteur 20 est placé à l'intérieur d'un bâtiment 40, par exemple un logement privatif, afin de permettre une bonne réception GSM à l'intérieur des murs. L'amplification bidirectionnelle du dispositif 20 permet de compenser l'atténuation de propagation liée au bâtiment. Les gains des amplificateurs 27, 27' sur la figure 2 peuvent par exemple être compris entre 15 dB et 25 dB.

Pour installer le dispositif 20, il suffit de le relier à l'antenne de télévision 23 via le câble coaxial 34. La plupart des habitations étant équipé d'une prise de télévision connectée à une antenne de télévision, on peut ainsi bénéficier d'une couverture GSM de bonne qualité à l'intérieur des murs, sans qu'il soit nécessaire de tirer des câbles ou de poser des antennes.

Pour bénéficier d'une réception de télévision, on peut bien entendu relier un poste de télévision 32 au dispositif 20, via le câble coaxial 35.

## Revendications

1. Système d'amplification de signaux radiofréquences de téléphonie mobile reçus dans une première bande de fréquences, comprenant
• une première antenne (23) et une deuxième antenne (24) adaptées à la réception et à l'émission de signaux radiofréquences de téléphonie mobile dans la première bande de fréquences,
• un dispositif répéteur (20), coopérant avec la première et la deuxième antenne, comprenant:
• des moyens d'isolation (25, 30, 31) pour diriger les signaux radiofréquences de téléphonie mobile reçus par la deuxième antenne vers une voie montante (29) et les signaux radiofréquences de téléphonie mobile reçus par la première antenne vers une voie descendante (26), et
• des moyens d'amplification bidirectionnels de signaux radioélectriques (27, 27') pour amplifier les signaux radioélectriques véhiculant sur la voie montante et sur la voie descendante ;
et dans lequel
la première antenne est agencée pour recevoir en outre des signaux radiofréquence de diffusion dans une deuxième bande de fréquences disjointe de la première bande de fréquences,
le dispositif répéteur (20) comportant en outre des moyens de raccordement (33),
les moyens d'isolation (25, 30, 31) étant adaptés à diriger :
• les signaux radiofréquences de diffusion reçus par la première antenne vers la voie descendante
• les signaux radiofréquences de diffusion amplifiés vers les moyens de raccordement.

2. Système d'amplification selon la revendication 1, dans lequel la deuxième bande de fréquences est comprise sensiblement entre 460 MHz et 860 MHz..

3. Dispositif répéteur (20) pour des signaux de téléphonie mobile, destiné à être raccordé, en service :
à une première antenne et à au moins une deuxième antenne adaptées à la réception et à l'émission de signaux radiofréquences de téléphonie mobile dans une première bande de fréquences
le dispositif comportant au moins
des premiers moyens de raccordement (21) propres à être reliés à la première antenne,
des deuxièmes moyens de raccordement (22) propres à être reliés à la deuxième antenne,
des moyens d'isolation (25, 30, 31) pour diriger les signaux radiofréquences de téléphonie mobile reçus par la deuxième antenne vers une voie montante (29) et les signaux radiofréquences de téléphonie mobile reçus par la première antenne vers une voie descendante (26), et
des moyens d'amplification bidirectionnels de signaux radioélectriques (27, 27') pour amplifier les signaux radioélectriques véhiculant sur la voie montante et sur la voie descendante ;
**caractérisé en ce que** les premiers moyens de raccordement (21) sont agencés pour, en service, recevoir en outre des signaux radioélectriques de diffusion dans une deuxième bande de fréquences disjointe de la première bande de fréquences, issus de la première antenne,
et **en ce que** les moyens d'isolation (25, 30, 31) sont adaptés à diriger :
• les signaux radiofréquences de diffusion reçus par la première antenne vers la voie descendante les signaux radiofréquences de diffusion amplifiés vers des troisièmes moyens de raccordement (33)

4. Dispositif répéteur (20) selon la revendication 3, dans lequel la deuxième bande de fréquences est comprise sensiblement entre 460 MHz et 860 MHz..

5. Dispositif répéteur (20) selon l'une des revendications 3 ou 4, comprenant en outre :
des premiers moyens de filtrage pour filtrer les signaux radioélectriques montants reçus par la deuxième antenne.

6. Dispositif répéteur (20) selon l'une des revendications 3 à 5, comprenant en outre :
des deuxièmes moyens de filtrage présentant une fréquence de coupure entre la deuxième bande de fréquences et une sous-bande de la première bande à laquelle appartiennent les signaux radioélectriques descendants de téléphonie mobile.

7. Dispositif répéteur (20) selon les revendications 4, 5 et 6, dans lequel
les moyens d'isolation comprennent un duplexeur (31) intégrant les premiers et deuxièmes moyens de filtrage.

8. Dispositif répéteur (20) selon l'une des revendications 4 à 7, dans lequel
les moyens d'isolation comprennent un coupleur (25).

9. Procédé d'amplification de signaux radiofréquences de téléphonie mobile dans une première bande de fréquences et de signaux radiofréquences de diffusion reçus dans une deuxième bande de fréquences disjointe de la première bande de fréquences, comprenant les étapes suivantes :
diriger les signaux radiofréquences de téléphonie mobile reçus par une deuxième antenne vers une voie montante (29) et les signaux radiofréquences de téléphonie mobile reçus par une première antenne vers une voie descendante (26),
diriger les signaux radiofréquences de diffusion reçu par la première antenne vers la voie descendante,
amplifier les signaux radioélectriques véhiculant sur la voie montante et sur la voie descendante,
diriger les signaux radiofréquences de diffusion amplifiés vers des moyens de raccordement.

## Claims

1. System for amplifying mobile telephony radiofrequency signals received in a first frequency band, comprising
• a first antenna (23) and a second antenna (24) suitable for receiving and transmitting mobile telephony radiofrequency signals in the first frequency band,
• a repeater device (20), cooperating with the first and the second antennas, comprising:
• isolation means (25, 30, 31) for directing the mobile telephony radiofrequency signals received by the second antenna to an uplink channel (29) and the mobile telephony radiofrequency signals received by the first antenna to a downlink channel (26), and
• bidirectional radioelectric signal amplification means (27, 27') for amplifying the radioelectric signals carried on the uplink channel and on the downlink channel;
and in which
the first antenna is arranged to receive, in addition, broadcast radiofrequency signals in a second frequency band separate from the first frequency band,
the repeater device (20) also comprising connection means (33),
the isolation means (25, 30, 31) being suitable for directing:
• the broadcast radiofrequency signals received by the first antenna to the downlink channel
• the amplified broadcast radiofrequency signals to the connection means.

2. Amplification system according to Claim 1, in which the second frequency band is roughly between 460 MHz and 860 MHz.

3. Repeater device (20) for mobile telephony signals, intended for connection, in service:
to a first antenna and to at least one second antenna that are suitable for receiving and transmitting mobile telephony radiofrequency signals in a first frequency band
the device comprising at least
first connection means (21) suitable for connection to the first antenna,
second connection means (22) suitable for connection to the second antenna,
isolation means (25, 30, 31) for directing the mobile telephony radiofrequency signals received by the second antenna to an uplink channel (29) and the mobile telephony radiofrequency signals received by the first antenna to a downlink channel (26), and
bidirectional radioelectric signal amplification means (27, 27') for amplifying the radioelectric signals carried on the uplink channel and on the downlink channel;
**characterized in that** the first connection means (21) are arranged, in service, to also receive broadcast radioelectric signals in a second frequency band separate from the first frequency band, obtained from the first antenna,
and **in that** the isolation means (25, 30, 31) are suitable for directing:
• the broadcast radiofrequency signals received by the first antenna to the downlink channel
the amplified broadcast radiofrequency signals to third connection means (33).

4. Repeater device (20) according to Claim 3, in which the second frequency band is roughly between 460 MHz and 860 MHz.

5. Repeater device (20) according to one of Claims 3 and 4, also comprising:
first filtering means for filtering the uplink radioelectric signals received by the second antenna.

6. Repeater device (20) according to one of Claims 3 to 5, also comprising:
second filtering means having a cut-off frequency between the second frequency band and a sub-band of the first band to which the downlink mobile telephony radioelectric signals belong.

7. Repeater device (20) according to Claims 4, 5 and 6, in which
the isolation means comprise a duplexer (31) incorporating the first and second filtering means.

8. Repeater device (20) according to one of Claims 4 to 7, in which
the isolation means comprise a coupler (25).

9. Method for amplifying mobile telephony radiofrequency signals in a first frequency band and broadcast radiofrequency signals received in a second frequency band separate from the first frequency band, comprising the following steps:
directing the mobile telephony radiofrequency signals received by a second antenna to an uplink channel (29) and the mobile telephony radiofrequency signals received by a first antenna to a downlink channel (26),
directing the broadcast radiofrequency signals received by the first antenna to the downlink channel,
amplifying the radioelectric signals carried on the uplink channel and on the downlink channel,
directing the amplified broadcast radiofrequency signals to connection means.

## Patentansprüche

1. Verstärkungssystem für in einem ersten Frequenzband empfangene Mobiltelefonie-Radiofrequenzsignale, das enthält
• eine erste Antenne (23) und eine zweite Antenne (24), die zum Empfang und zum Senden von Mobiltelefonie-Radiofrequenzsignalen im ersten Frequenzband geeignet sind,
• eine mit der ersten und der zweiten Antenne zusammenwirkende Repeater-Vorrichtung (20), die enthält:
• Isoliereinrichtungen (25, 30, 31), um die von der zweiten Antenne empfangenen Mobiltelefonie-Radiofrequenzsignale zu einem Upstream-Kanal (29) und die von der ersten Antenne empfangenen Mobiltelefonie-Radiofrequenzsignale zu einem Downstream-Kanal (26) zu lenken, und
• bidirektionale Verstärkungseinrichtungen von Funksignalen (27, 27'), um die auf dem Upstream-Kanal und auf dem Downstream-Kanal transportierten Funksignale zu verstärken;
und bei dem
die erste Antenne eingerichtet ist, um außerdem Rundfunk-Radiofrequenzsignale in einem zweiten Frequenzband zu empfangen, das vom ersten Frequenzband getrennt ist,
die Repeater-Vorrichtung (20) außerdem Anschlusseinrichtungen (33) aufweist,
wobei die Isoliereinrichtungen (25, 30, 31) geeignet sind, um:
• die von der ersten Antenne empfangenen Rundfunk-Radiofrequenzsignale zum Downstream-Kanal zu lenken,
• die verstärkten Rundfunk-Radiofrequenzsignale zu den Anschlusseinrichtungen zu lenken.

2. Verstärkungssystem nach Anspruch 1, bei dem das zweite Frequenzband im Wesentlichen zwischen 460 MHz und 860 MHz liegt.

3. Repeater-Vorrichtung (20) für Mobiltelefonie-Signale, die dazu bestimmt ist, im Betrieb verbunden zu werden mit:
einer ersten Antenne und mindestens einer zweiten Antenne, die zum Empfang und zum Senden von Mobiltelefonie-Radiofrequenzsignalen in einem ersten Frequenzband geeignet sind,
wobei die Vorrichtung mindestens aufweist
erste Anschlusseinrichtungen (21), die mit der ersten Antenne verbunden werden können,
zweite Anschlusseinrichtungen (22), die mit der zweiten Antenne verbunden werden können,
Isoliereinrichtungen (25, 30, 31), um die von der zweiten Antenne empfangenen Mobiltelefonie-Radiofrequenzsignale zu einem Upstream-Kanal (29) zu lenken und die von der ersten Antenne empfangenen Mobiltelefonie-Radiofrequenzsignale zu einem Downstream-Kanal (26) zu lenken, und
bidirektionale Verstärkungseinrichtungen von Funksignalen (27, 27'), um die auf dem Upstream-Kanal und auf dem Downstream-Kanal transportierten Funksignale zu verstärken;
**dadurch gekennzeichnet, dass** die ersten Anschlusseinrichtungen (21) eingerichtet sind, um im Betrieb außerdem von der ersten Antenne stammende Rundfunksignale in einem zweiten Frequenzband zu empfangen, das vom ersten Frequenzband getrennt ist,
und dass die Isoliereinrichtungen (25, 30, 31) geeignet sind, um zu lenken:
• die von der ersten Antenne empfangenen Rundfunksignale zum Downstream-Kanal,
• die verstärkten Rundfunksignale zu dritten Anschlusseinrichtungen (33).

4. Repeater-Vorrichtung (20) nach Anspruch 3, bei der das zweite Frequenzband im Wesentlichen zwischen 460 MHz und 860 MHz liegt.

5. Repeater-Vorrichtung (20) nach einem der Ansprüche 3 oder 4, die außerdem enthält:
erste Filtereinrichtungen, um die von der zweiten Antenne empfangenen Upstream-Funksignale zu filtern.

6. Repeater-Vorrichtung (20) nach einem der Ansprüche 3 bis 5, die außerdem enthält:
zweite Filtereinrichtungen, die eine Grenzfrequenz zwischen dem zweiten Frequenzband und einem Teilband des ersten Bands aufweisen, zu dem die Downstream-Mobiltelefonie-Funksignale gehören.

7. Repeater-Vorrichtung (20) nach den Ansprüchen 4, 5 und 6, bei der die Isoliereinrichtungen einen Duplexer (31) enthalten, der die ersten und zweiten Filtereinrichtungen umfasst.

8. Repeater-Vorrichtung (20) nach einem der Ansprüche 4 bis 7, bei der die Isoliereinrichtungen einen Koppler (25) enthalten.

9. Verfahren zur Verstärkung von Mobiltelefonie-Radiofrequenzsignalen in einem Frequenzband und von in einem zweiten Frequenzband getrennt vom ersten empfangenen Rundfunksignalen, das die folgenden Schritte enthält:
Lenken der von einer zweiten Antenne empfangenen Mobiltelefonie-Radiofrequenzsignale zu einem Upstream-Kanal (29) und der von einer ersten Antenne empfangenen Mobiltelefonie-Radiofrequenzsignale zu einem Downstream-Kanal (26),
Lenken der von der ersten Antenne empfangenen Rundfunksignale zum Downstream-Kanal,
Verstärken der auf dem Upstream-Kanal und auf dem Downstream-Kanal transportierten Funksignale,
Lenken der verstärkten Rundfunksignale zu Anschlusseinrichtungen.
